# EUROPEAN PATENT SPECIFICATION

(11) **EP 4 262 485 B1**
(45) Date of publication and mention of the grant of the patent: **02.10.2024**
(21) Application number: 21742685.7
(22) Date of filing: 02.07.2021
(51) Int. Cl.: A47J 27/08

(54) **A COOKING UTENSIL**
KOCHGERÄT
USTENSILE DE CUISSON

(30) Priority: 18.12.2020 CN 202011507934; 18.12.2020 CN 202023084359 U
(43) Date of publication of application: 25.10.2023
(73) Proprietor: Zhejiang Shaoxing Supor Domestic Electrical Appliance Co., Ltd., Shaoxing, Zhejiang 312017 (CN)
(72) Inventor: DING, Jinju, Shaoxing, Zhejiang 312017 (CN); LI, Jian, Shaoxing, Zhejiang 312017 (CN); SHI, Tingfei, Shaoxing, Zhejiang 312017 (CN)
(74) Representative: LLR
(86) International application number: PCT/CN2021/104128
(87) International publication number: WO 2022/127079

(56) References cited:
- CN-U- 209 404 427
- DE-A1- 3 703 448
- GB-A- 700 712

## Description

### Field

The present invention relates to the technical field of cooking utensils.

### Background

In the relevant art, a pressure cooker has the feature of increasing the pressure inside the cooker and thus increasing the cooking temperature. It is widely used for cooking food that is tough to cook. Based on the heating method, pressure cookers can be classified into pressure cookers used on an open fire and electric pressure cookers. Among them, pressure cookers used on an open fire have the advantage of being not bulky. Electric pressure cookers are more bulky but have a temperature control system and are equipped with abundant cooking programs, which improves food cooking effects.

The pressure-bearing structure of a pressure cooker in the relevant art is generally composed of pot flanging buckles and lid flanging buckles which cooperate with each other. The process of flanging is complicated. In addition, the provision of flanging buckles affects the esthetics of the cooker. Conventional electric pressure cookers have a large overall volume and will occupy a relatively large kitchen space. DE-A1 -3703448 shows a cooking vessel comprising a pot, a lid covering the pot and a locking structure arranged between the lid and the pot, wherein the locking structure comprises a first thread provided on the pot and a second thread provided on the lid, the second thread cooperating with the first thread and wherein the first thread and the second thread are trapezoidal threads.

### Summary

The main objective of the present invention is to provide a cooking utensil so as to solve the problem in the relevant art that the process of flanging is complicated. The problem is solved by a cooking utensil comprising the features of claim 1. Preferred embodiments are claimed in the dependent claims.

To this end, the present invention provides a cooking utensil, comprising: a pot; a lid covering the pot; and, a locking structure provided between the lid and the pot, the locking structure comprising a first thread provided on the pot and a second thread provided on the lid, the second thread cooperating with the first thread, wherein: a first connecting line L1 between a first end of the first thread and a center of the pot forms a first angle n with a second connecting line L2 between a second end of the first thread and the center of the pot, the first angle n satisfying: 180° ≤ n ≤ 360° , so that the first thread has a length between half a turn and one turn of a circumference of the pot; the first thread and the second thread are trapezoidal threads, the first thread has a thread angle d1 that satisfies: 20° ≤ d1 ≤ 40° , and the second thread has a thread angle d2 that satisfies: 20° ≤ d2 ≤ 40° .

The locking of the pot and the lid is achieved by the cooperation between the first thread and the second thread. Moreover, the above-mentioned first angle n makes the user's screwing angle smaller during operation, which is convenient for the user to open and close the lid. Moreover, providing trapezoidal threads and selecting the above-mentioned thread angle value ensure the locking effect of the first thread and the second thread, thereby ensuring the safety of the cooking utensil in pressurized state. Therefore, the technical solution of the present application can well take into account the convenience of user operation and the pressurization safety at the same time. In addition, thread processing is simple, cheap and can provide good locking effect. Further, compared with the flanging process in the relevant art, thread processing does not need to cut a large amount of material to form spaced notches to achieve the fit between the pot and the lid, so it is rather simple and the obtained connection strength is higher. Therefore, the technical solution of the present application effectively solves the problem in the relevant art that the process of flanging is complicated.

Further, the first angle n satisfies: 300° ≤ n ≤ 355° . With this value, the user operation convenience and pressurization safety can be further improved.

Further, the first thread has a tooth height c1 that satisfies: 2 mm ≤ c1 ≤ 4 mm, and the second thread has a tooth height c2 that satisfies: 2 mm ≤ c2 ≤ 4mm. With such dimensions, the locking effect of the first thread and the second thread and thus the safety of the cooking utensil when in a pressurized state can be ensured.

Further, the first thread has a tooth top width f1 that satisfies: 2 mm ≤ f1 ≤ 3 mm, and a tooth bottom width b1 that satisfies: 4 mm ≤ b1 ≤ 6 mm; and, the second thread has a tooth top width f2 that satisfies: 2 mm ≤ f2 ≤ 3 mm, and a tooth bottom width b2 that satisfies: 4 mm ≤ b2 ≤ 6 mm. With such dimensions, the connection strength of the locking structure is ensured so that the cooking utensil can meet pressure bearing requirements during the course of pressurized cooking while at the same time material waste and space occupation caused by a bigger overall size of the cooker assembly is avoided.

Further, the pot comprises a pot body and a pot handle provided on the pot body, and the lid comprises a lid handle. The first thread is provided on an outer side wall of the pot body, and the first connecting line L1 between the first end of the first thread and the center of the pot forms a second angle e with a center line L3 of the pot handle, the second angle e satisfying: 3° ≤ e ≤ 30° . During utilization, a user first aligns the lid handle with the pot handle and needs only rotate the lid by the angle e to align the starting end of the second thread with the starting end of the first thread, arriving at the starting position of screwing. The provision of the second angle e enables the user to rapidly achieve the alignment between the first thread and the second thread, facilitating utilization by the user and improving the user's utilization experience.

Further, the pot is made of metal, the first thread is formed by rolling on the pot, and the pot has a thickness h that satisfies: 0.8 mm ≤ h ≤ 1.5 mm. By using the roll forming process for the first thread, material can be saved for the pot. In addition, the strength of the thread is high and thus able to ensure the connection strength of the locking structure so that the connection between the pot and the lid can meet pressure bearing requirements during the course of pressurized cooking.

Further, the first thread and the second thread are in clearance fit, and the fit clearance a between the first thread and the second thread satisfies: 0.3 mm ≤ a ≤ 0.8 mm. This appropriate provision of the fit clearance a not only meets the pressure bearing requirements of the cooking utensil but also prevents an increase of processing costs due to the pursuit of fitting precision.

Further, the first thread and the second thread are continuous thread structures, or the first thread and the second thread comprise a plurality of thread segments. With the provision of continuous thread structures, the connection strength between the first thread and the second thread can be effectively ensured so that the pressure cooker can meet pressure bearing requirements during the course of utilization. Provided that the connection strength is ensured, the first thread and the second thread can comprise a plurality of thread segments. The provision of the plurality of thread segments allows a user to achieve the locking connection between the lid and the pot by twisting a very small angle.

Further, the pot comprises a pot body and a temperature sensing probe penetrating a side wall of the pot body, a temperature sensing end of the temperature sensing probe extending into the pot body. The provision of the temperature sensing probe enables real-time monitoring of changes of the temperature inside the pot.

Further, the cooking utensil further comprises a cooker assembly, a connecting device, and a controller, the controller being provided inside the cooker assembly, the connecting device connecting the controller and the temperature sensing probe. The provision of the connecting device and the controller enables the receipt and processing of temperature signals transmitted by the temperature sensing probe. Based on temperature signals transmitted in real time, the controller adjusts the heating temperature and/or cooking program to effectuate a better control of the cooking process, improving cooking results.

Further, the pot further comprises a pot handle provided on the pot body, a part of the temperature sensing probe is provided inside the pot handle, and the connecting device comprises a first wireless module and a second wireless module that are communicatively connected, the first wireless module being provided inside the pot handle and connected with the temperature sensing probe, and the second wireless module being provided in the cooker assembly and connected with the controller. With the provision of the connecting device, complicated cabling is not required in order to transmit temperature signals in real time to the controller. Based on temperature signals received, the controller adjusts correspondingly the heating temperature and/or cooking program to effectuate a better control of the cooking process, improving cooking effects.

Further, the cooker assembly comprises a cooker body and a heating device provided at a bottom of the cooker body, the cooker body comprising an outer shell, an inner shell, and a ring portion connected to a top of the outer shell and the inner shell, the second wireless module being provided between the outer shell and the inner shell. The provision of the heating device inside the cooker body enables the heating of the pot.

Further, a groove is provided in the inner shell, and the cooker body further comprises a plate having a position-limiting portion provided in the groove, the second wireless module being provided between the position-limiting portion and the ring portion. Due to the fact that the groove and the plate are located below the first wireless module and the gap between the first wireless module and the second wireless module is provided to be within an appropriate distance, the second wireless module is within the range required for signal transmission, thus ensuring the receipt of signals transmitted by the first wireless module by the second wireless module.

Further, the pot comprises a pot body and a pressure relief port provided at a pot mouth of the pot body. This pressure relief port is a weak position on the pot body. When the pressure inside the pot reaches a certain level, the space inside the pot is in communication with the atmosphere via the pressure relief port, achieving pressure relief.

Further, the cooking utensil further comprises a sealing ring and a fixed pressing ring, a connecting part of the sealing ring being located between the lid and the fixed pressing ring, and the sealing ring being fixed to an inner surface of the lid through the fixed pressing ring. The provision of the sealing ring and the fixed pressing ring enables an excellent result of sealing the cooking space between the pot and the lid after the lid is in position after screwing, facilitating pressurization inside the pot.

### Description of the Drawings

The drawings accompanying the present application, which constitute part of the present application, are used for further understanding the present invention. Illustrative embodiments of the present invention and their description are used for explaining the present invention, without constituting any unduly limitation of the present invention. In the accompanying drawings:
Figure 1 shows a schematic structural view in perspective of an embodiment of the cooking utensil according to the present invention;
Figure 2 shows a schematic exploded structural view of the cooking utensil of Figure 1;
Figure 3 shows a schematic exploded structural view of a pot and a cooker assembly of the cooking utensil of Figure 1;
Figure 4 shows a schematic structural view of part of the cooker assembly of Figure 3;
Figure 5 shows a schematic structural view in perspective from another perspective of the cooker assembly of Figure 4;
Figure 6 shows a schematic structural view in perspective of a plate of the cooker assembly of Figure 4;
Figure 7 shows a schematic structural view in perspective of the cooker assembly of Figure 5, without the plate mounted;
Figure 8 shows a schematic top view of the pot and the cooker assembly of the cooking utensil of Figure 1;
Figure 9 shows a schematic structural view in perspective of a lid of the cooking utensil of Figure 1;
Figure 10 shows a schematic exploded structural view of a lid, a sealing ring, and a fixed pressing ring of the cooking utensil of Figure 1;
Figure 11 shows a schematic sectional view of the cooking utensil of Figure 1;
Figure 12 shows a schematic enlarged view of the detail A of the cooking utensil of Figure 11;
Figure 13 shows a schematic view of parameters of a first thread of the cooking utensil of Figure 1;
Figure 14 shows a schematic view of parameters of a second thread of the cooking utensil of Figure 1;
Figure 15 shows a schematic enlarged view of the detail B of the cooking utensil of Figure 11; and
Figure 16 shows a schematic enlarged view of the detail C of the cooking utensil of Figure 11.

The above-described accompanying drawings contain the following reference numerals:
10: pot; 11: pot body; 111: pressure relief port; 12: pot handle; 13: temperature sensing probe; 20: lid; 21: lid handle; 30: locking structure; 31: first thread; 32: second thread; 40: cooker assembly; 42: cooker body; 421: outer shell; 422: inner shell; 4221: groove; 423: ring portion; 43: heating device; 44: plate; 441: position-limiting portion; 50: connecting device; 51: first wireless module; 52: second wireless module; 61: sealing ring; 62: fixed pressing ring; a: fit clearance; c1: tooth height of the first thread; c2: tooth height of the second thread; f1: tooth top width of the first thread; b1: tooth bottom width of the first thread; f2: tooth top width of the second thread; b2: tooth bottom width of the second thread; d1: thread angle of the first thread; d2: thread angle of the second thread.

### Detailed Description of the Embodiments

The technical solutions of embodiments of the present invention will be described below clearly and completely in conjunction with the accompanying drawings of embodiments of the present invention. Of course, the described embodiments are only some, rather than all, of the embodiments of the present invention. The following description of at least one exemplary embodiment is in fact only illustrative, and in no way constitutes any limitation on the present invention or its application or use.

It should be noted that the terms used herein are only to describe specific modes of realization, and are not intended to limit the exemplary modes of realization of the present application. As used herein, unless the context clearly indicates otherwise, the singular form is also intended to include plural forms. In addition, it should also be understood that when the terms "comprise" and/or "include" are used in the present description, they indicate the existence of a feature, step, operation, device, component, and/or a combination thereof.

Unless claimed in the independent claim, the relative arrangement of components and steps, numerical expressions, and numerical values set forth in these embodiments do not limit the scope of the present invention. At the same time, it should be understood that, for ease of description, the sizes of various parts shown in the accompanying drawings are not drawn in accordance with actual proportional relationships. Technologies, methods, and equipments known to those of ordinary skill in the relevant fields may not be discussed in detail, but where appropriate, the technologies, methods, and equipments should be regarded as part of the present disclosure. It should be noted that similar reference numerals and letters denote similar items in the following accompanying drawings. Therefore, once an item is defined in one accompanying drawing, it does not need to be further discussed in subsequent accompanying drawings.

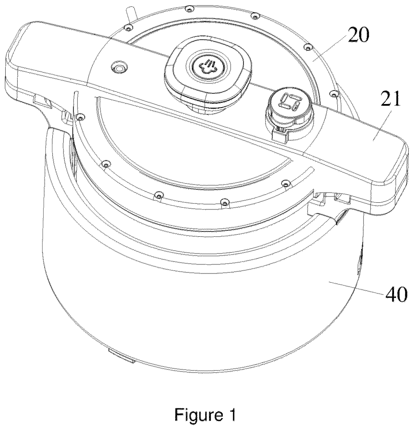

As shown in Figures 1, 2, 8, 11, and 12, the cooking utensil of the present embodiment comprises: a pot 10, a lid 20, and a locking structure 30. The lid 20 covers the pot 10. The locking structure 30 is provided between the lid 20 and the pot 10. The locking structure 30 comprises a first thread 31 provided on the pot 10 and a second thread 32 provided on the lid 20. The second thread 32 cooperates with the first thread 31. In this embodiment, a first connecting line L1 between a first end of the first thread 31 and a center of the pot 10 forms a first angle n with a second connecting line L2 between a second end of the first thread 31 and the center of the pot 10, the first angle n satisfying: 180° ≤ n ≤ 360° ; the first thread 31 and the second thread 32 are trapezoidal threads, the first thread 31 has a thread angle d1 that satisfies: 20° ≤ d1 ≤ 40° , and the second thread 32 has a thread angle d2 that satisfies: 20° ≤ d2 ≤ 40° .

With the technical solution of this embodiment, a first thread 31 is provided on the pot 10 and a second thread 32 is provided on the lid 20. The locking of the pot 10 and the lid 20 is achieved by the cooperation between the first thread 31 and the second thread 32. A first connecting line L1 between a first end of the first thread 31 and a center of the pot 10 forms a first angle n with a second connecting line L2 between a second end of the first thread 31 and the center of the pot 10, the first angle n satisfying: 180° ≤ n ≤ 360° (in other words, the first thread 31 has a length between half a turn and one turn of a circumference of the pot 10); the first thread 31 and the second thread 32 are trapezoidal threads, the first thread 31 has a thread angle d1 that satisfies: 20° ≤ d1 ≤ 40° , and the second thread 32 has a thread angle d2 that satisfies: 20° ≤ d2 ≤ 40° . Thanks to the above-described first angle n, the angle of screwing of a user during operation is relatively small and it suffices to screw at most one full turn, facilitating operations of the user to open or close the lid. Moreover, by providing trapezoidal threads and selecting the above-described thread angle values, the locking effect of the first thread 31 and the second thread 32 can be ensured and safety of the cooking utensil in a pressurized state can be ensured. Therefore, the technical solution of this embodiment can well take into account the convenience of user operation and the pressurization safety at the same time. The processing of threads has the advantages of being simple, having a low cost, and achieving a good locking effect. In addition, in comparison to the process of flanging in the relevant art, the processing of threads does not need to cut a large amount of materials to form notches spaced part so as to achieve the cooperation between the pot 10 and the lid 20, thus is simple and leads to a relatively high connection strength. Therefore, the technical solution of this embodiment effectively solves the problem in the relevant art that the process of flanging is complicated.

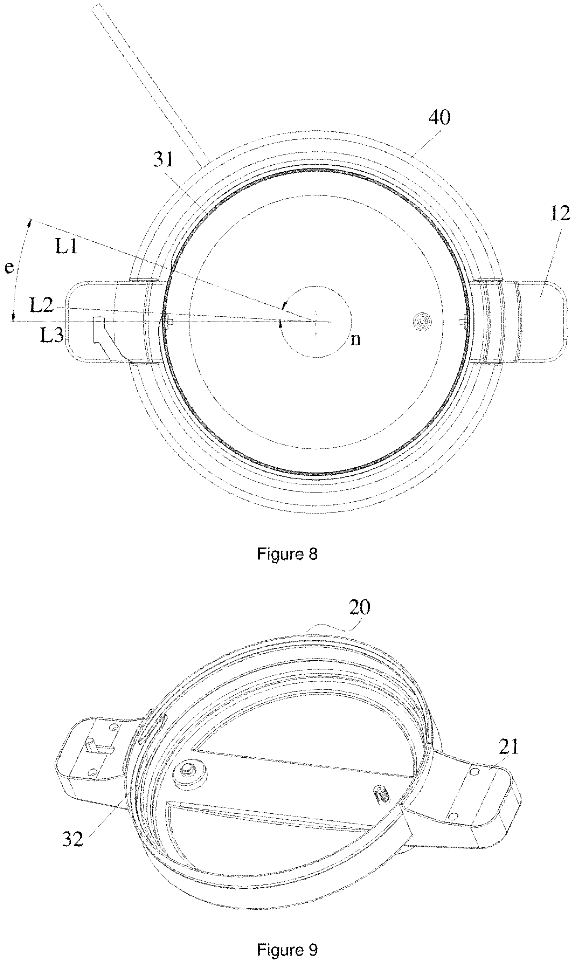

As shown in Figure 8, the first connecting line L1 between a first end of the first thread 31 and a center of the pot 10 refers to a connecting line in a certain horizontal plane between the first end of the first thread 31 and the center of the pot 10. Correspondingly, the second connecting line L2 between a second end of the first thread 31 and the center of the pot 10 refers to a connecting line in a certain horizontal plane between the second end of the first thread 31 and the center of the pot 10.

If n is smaller than 180°, it will affect pressurization safety. When n is greater than 360°, it will cause a user to expend a lot of efforts when twisting the lid over an excessive angle and even be unable to complete the operation in one pass, needing potentially to twist it twice.

The first thread 31 and the second thread 32 are trapezoidal threads because the strength of trapezoidal threads is relatively good and they are easy to process and demold and have a relatively good pressure bearing capability. The first thread 31 has a thread angle d1 that satisfies: 20° ≤ d1 ^40° , and the second thread 32 has a thread angle d2 that satisfies: 20° ≤d2 ≤ 40 ° . The above-described thread angle d1 and the first angle n are associated with each other and together decide the strength of the first thread 31 and thus the pressure bearing capability of the first thread 31.

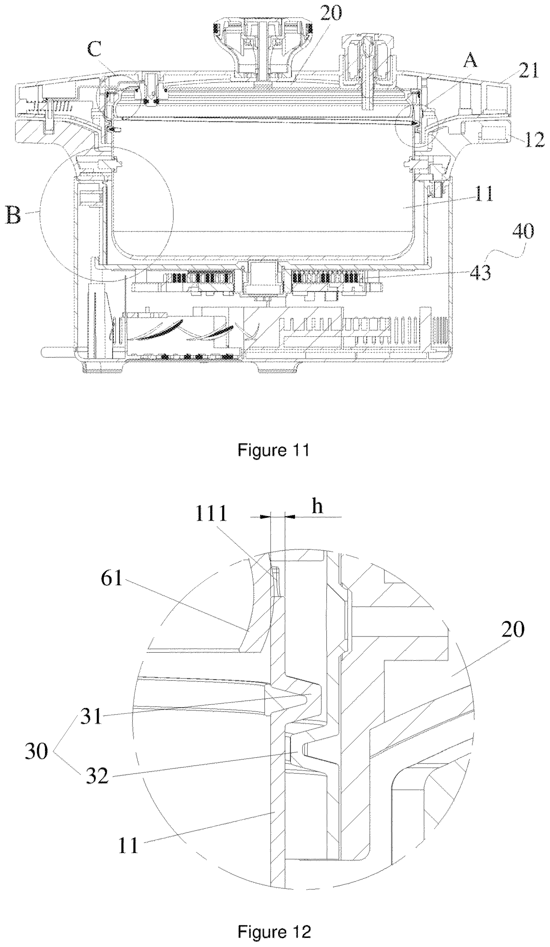

As shown in Figures 11 to 14, in this embodiment, the thread angle d1 of the first thread 31 is equal to the thread angle d2 of the second thread 32, i.e., d1 = d2 = 30°. This value is able to ensure that the first thread 31 and the second thread 32 cooperate tightly with each other and thus ensure the connection strength of the locking structure 30. When d1 and d2 are smaller than 20°, processing is relatively difficult and it would be relatively difficult for a user to screw the pot 10 and the lid 20 together, causing inconvenience to the user; when d1 and d2 are greater than 40°, the connection strength of the locking structure 30 is unable to meet pressure bearing requirements on the cooking utensil during the course of pressurized cooking.

The length of the second thread 32 matches the length of the first thread 31. In other words, the length of the second thread 32 is between half a turn and one turn of the circumference of the lid 20. Of course, the length of the second thread 32 can be such that it is longer than that of the first thread 31 and exceeds one turn of the circumference of the lid 20.

Preferably, the first angle n satisfies: 300° ≤ n ≤ 355° This value is able to further improve user operation convenience and pressurization safety. As preferred modes of realization, the first angle n can be 300° , 310° , 330° , 340° , 350° , or 355° .

The first thread 31 has a tooth height c1 that satisfies: 2mm ≤ c1 ≤ 4 mm, and the second thread 32 has a tooth height c2 that satisfies: 2 mm≤ c2 ≤ 4 mm. These sizes make it possible to ensure the locking effect of the first thread 31 and the second thread 32 and the safety of the cooking utensil when in a pressurized state. In addition, with these sizes, the processing costs can also be taken into account while rendering the dimension of the cooking utensil reasonable. Preferably, c1 = c2 = 3 mm.

In this embodiment, the connection between the lid 20 and the pot 10 is achieved by means of thread screwing, leading to the realization of a pressure bearing function. Thread connection has advantages of being easy and cheap. Moreover, by using thread screwing, the appearance of the pot 10 and the lid 20 is rendered more esthetic.

The first thread 31 has a tooth top width f1 that satisfies: 2 mm ≤ f1 ≤ 3 mm, and a tooth bottom width b1 that satisfies: 4 mm ≤ b1 ≤ 6 mm; and, the second thread 32 has a tooth top width f2 that satisfies: 2 mm ≤ f1 ≤ 3 mm, and a tooth bottom width b2 that satisfies: 4 mm ≤ b2 ≤ 6 mm. These sizes ensure the connections strength of the locking structure 30 so that the cooking utensil is able to meet pressure bearing requirements during the course of pressurized cooking while avoiding material waste and excessive space occupation caused by a bigger overall size of a cooker assembly.

In this embodiment, as shown in Figures 11 to 14, the tooth top width f1 of the first thread 31 is equal to the tooth top width f2 of the second thread 32, i.e., f1 = f2 = 2.5 mm. The tooth bottom width b1 of the first thread 31 is equal to the tooth bottom width b2 of the second thread 32, i.e., b1 = b2 = 5 mm. Thus, it can be ensured that the first thread 31 and the second thread 32 cooperate tightly, ensuring the connection strength of the locking structure 30. It should be noted that, when f1 and f2 are smaller than 2 mm or b1 and b2 are smaller than 4 mm, the connection strength of the locking structure 30 cannot meet the pressure bearing requirements of the cooking utensil during the course of pressurized cooking. Moreover, when f1 and f2 are greater than 3 mm or b1 and b2 are greater than 6 mm, though the increase in size can further increase the connection strength of the locking structure 30, it will further increase the overall size of the cooking utensil, which, on one hand, will cause material waste, and on the other hand, will make the cooking utensil occupy an excessive space. The dimensions described above ensure the connection strength of the locking structure 30 and enable the cooking utensil to meet the pressure bearing requirements during the course of pressurized cooking, while avoiding material waste and space occupation caused by a bigger overall size of the cooker assembly 40.

In the present application, the first thread can be an external thread, and correspondingly, the second thread is an internal thread; or, the first thread is an internal thread, and correspondingly, the second thread is an external thread. These two ways of providing the threads are both able to achieve the locking between the lid and the pot. The first thread and the second thread can be right-hand threads. They can also be left-hand threads.

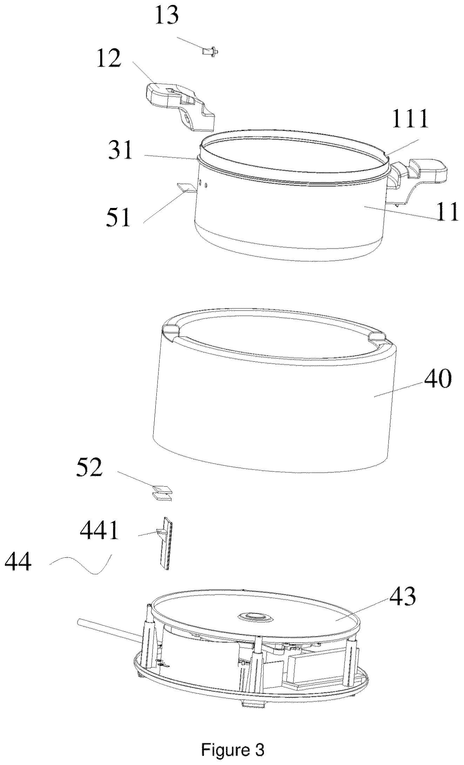

In order to reduce the difficulty of processing threads while ensuring the locking effect of the locking structure 30, in this embodiment, the first thread 31 is an external thread, and the second thread 32 is an internal thread. Moreover, taking into consideration the utilization habits of a user when twisting the lid 20 to lock the lid 20 with the pot 10, in this embodiment, the first thread 31 and the second thread 32 are right-hand threads. The pot 10 comprises a pot body 11 and a pot handle 12 provided on the pot body 11, and the lid 20 comprises a lid handle 21. The first thread 31 is an external thread provided on an outer side wall of the pot body 11. The first connecting line L1 between the first end of the first thread 31 and the center of the pot 10 forms a second angle e with a center line of the pot handle 12, the second angle e satisfying: 3° ≤ e ≤ 30°. The above-mentioned first end of the first thread 31 is the starting position of the first thread 31 on the pot 10. As shown in Figures 3 and 8, in this embodiment, the second angle e is 15°. As a preferred mode of realization, the sum of the first angle n and the second angel e can be made equal to 360°.

In this embodiment, there are two pot handles 12 and two lid handles 21 are correspondingly provided. Two pot handles 12 and two lid handles 21 facilitate a user's operations.

During utilization, a user makes the first thread 31 screwed to the second thread 32 by holding the lid handles 21 to rotate the lid 20, so as to achieve the locking between the lid 20 and the pot 10. The user can first align the lid handles 21 with the pot handles 12 (the position of the lid handles 21 is as shown in Figure 1) and needs only twist the lid by the angle e to align the starting end of the second thread 32 on the lid 20 with the starting end of the first thread 31 on the pot 10, arriving at the starting position of screwing. The user can achieve the locking between the lid 20 and the pot 10 by continuing to twist the lid 20 to rotate a full round so that the first thread 31 and the second thread 32 engage with each other entirely. The provision of the second angle e enables the user to rapidly achieve the alignment between the first thread 31 and the second thread 32, facilitating the screwing of the second thread 32 on the lid 20 to the first thread 31 by the user. Thus, a user's alignment and screwing of the lid 20 during the course of utilization is facilitated and the user's utilization experience is improved.

As shown in Figures 11 to 14, in this embodiment, the pot 10 is made of metal, specifically, stainless steel. The first thread 31 is formed by rolling on the pot 10, and the pot 10 has a thickness h that satisfies: 0.8 mm ≤ h ≤ 1.5mm. Preferably, h = 1.0 mm or h = 1.2 mm. By using the roll forming process for the first thread 31, the material of the pot 10 can be saved. In addition, the strength of the thread is high and thus able to ensure the connection strength of the locking structure 30 so that the connection between the pot 20 and the lid 10 is able to meet pressure bearing requirements during the course of pressurized cooking. It should be noted that: when the thickness h is smaller than 0.8 mm, the pressure bearing requirements of the pressure cooker during the course of utilization cannot be met; when the thickness h is greater than 1.5 mm, it will cause material waste and increase the weight of the entire cooking utensil.

In other modes of realization of the present application, another processing method, such as turning and grinding, can be used for the first thread and the second thread, so long as the threads produced by the processing are able to achieve the locking between the lid and the pot and meet the pressure bearing requirements of the cooking utensil during the course of pressurized cooking.

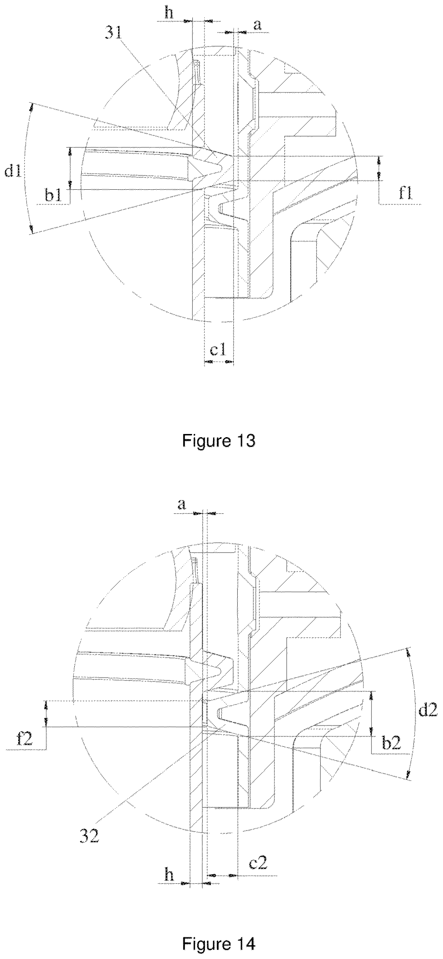

The first thread 31 and the second thread 32 are in clearance fit, and the fit clearance a between the first thread 31 and the second thread 32 satisfies: 0.3 mm ≤ a ≤ 0.8mm. As shown in Figures 13 and 14, in this embodiment, a = 0.5 mm. With such a fit clearance a, the connection strength of the locking structure 30 can be satisfied. When the fit clearance a is smaller than 0.3 mm, the processing costs of the threads will increase.

Pressure bearing tests are performed on cooking utensils obtained in embodiments 1 to 6 and comparisons 1 to 4. Their performance is shown in Table 1.

**Table 1**

| | First angle n (°) | Thread angle d1, d2 (°) | Tooth height c1, c2 (mm) | Tooth top width f1, f2 (mm) | Breaking pressure (Kpa) |
|---|---|---|---|---|---|
| Embodiment 1 | 180° | 30° | 3 mm | 2.5 mm | 400 |
| Embodiment 2 | 330° | 30° | 3 mm | 2.5 mm | 800 |
| Embodiment 3 | 360° | 30° | 3 mm | 2.5 mm | 850 |
| Embodiment 4 | 330° | 40° | 3 mm | 2.5 mm | 700 |
| Embodiment 5 | 330° | 30° | 2 mm | 2.5 mm | 600 |
| Embodiment 6 | 330° | 30° | 3 mm | 2 mm | 650 |
| Comparison 1 | 170° | 30° | 3 mm | 2.5 mm | 300 |
| Comparison 2 | 330° | 45° | 3 mm | 2.5 mm | 600 |
| Comparison 3 | 330° | 30° | 1.5 mm | 2.5 mm | 400 |
| Comparison 4 | 330° | 30° | 3 mm | 1.5 mm | 550 |

The above-mentioned breaking pressure refers to the pressure under which there is no gas leak from the cooking utensil. Here, a certain extent of deformation is allowed for the pot and the lid.

It can be shown by comparing the data in Table 1 that technical solutions that use embodiments 1 to 6 of the present invention can increase the breaking pressure of the cooking utensil by using appropriate values of four parameters. Among them, embodiment 2 can achieve a good compromise between the breaking pressure and user operation convenience. When the first angle n takes a value smaller than 180°, it can be seen from the values of comparison 1 that its breaking pressure is relatively low, offering insufficient safety. When the first angle n takes a value equal to or higher than 330°, the breaking pressure can meet safety requirements.

It can be seen by comparing the data of embodiment 2, embodiment 4, and comparison 2 that when the thread angles d1 and d2 satisfy: 20° ≤ d1 = d2 ≤ 40°, the breaking pressure is relatively high, offering relatively high safety.

It can be seen by comparing the data of embodiment 2, embodiment 5, and comparison 3 that when the tooth heights c1 and c2 satisfy: 2 mm ≤ c1 = c2 ≤ 4 mm, the breaking pressure is relatively high, offering relatively high safety.

It can be seen by comparing the data of embodiment 2, embodiment 6, and comparison 4 that when the tooth top widths f1 and f2 satisfy: 2 mm ≤ f1 = f2 ≤ 3 mm, the breaking pressure is relatively high, offering relatively high safety.

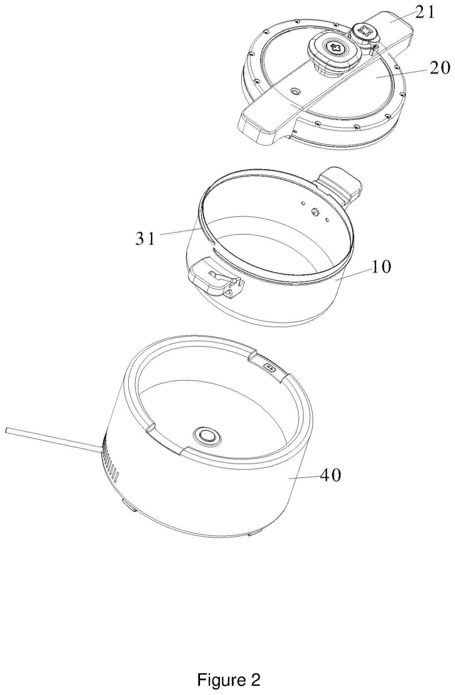

It can also be seen from Table 1 that the cooking utensil obtained by using the technical solutions of the present invention has the advantages of offering pressurization safety and facilitating a user's operations. As shown in Figures 2, 3, 8, and 9, in this embodiment, the first thread 31 and the second thread 32 are continuous thread structures. By providing continuous threads, the connection strength of the first thread 31 and the second thread 32 can be effectively ensured so that the cooking utensil is able to meet the pressure bearing requirements during the course of utilization.

In other modes of realization of the present application, provided that the connection strength is ensured, the first thread and the second thread can comprise a plurality of thread segments. The first thread and the second thread are correspondingly processed into a plurality of segments. During the course of screwing the lid by a user, when the threads of the second thread are aligned with the intervals between the plurality of thread segments of the first thread, in order to achieve the locking connection between the lid and the pot, it suffices to twist by a very small angle so that the threads of the first thread and the second thread correspond to each other in position.

In order to improve food cooking effects, the temperature inside the pot 10 needs to be measured. As shown in Figures 3, 8, 11, and 15, the pot 10 comprises a pot body 11 and a temperature sensing probe 13 penetrating a side wall of the pot body 11, a temperature sensing end of the temperature sensing probe 13 extending into the pot body 11 to measure the temperature in the pot body 11. By providing the temperature sensing probe 13 in a penetrating way on the pot body 11, the temperature sending end of the temperature sensing probe 13 is able to extend into the interior of the pot 10 and monitor temperature changes in the pot in real time, achieving accurate measurement of the temperature in the pot.

As shown in Figures 3, 8, 11, and 15, the cooking utensil further comprises a cooker assembly 40, a connecting device 50, and a controller (not illustrated in the drawings; it can be a control chip), the controller being provided inside the cooker assembly 40, the connecting device 50 connecting the controller and the temperature sensing probe 13. The temperature sensing probe 13 monitors temperature changes in the pot 10 in real time and transmits temperature signals to the controller via the connecting device 50. Based on the temperature signals transmitted in real time, the controller correspondingly adjusts the heating temperature and/or cooking program to effectuate a better control of the cooking process, improving cooking effects.

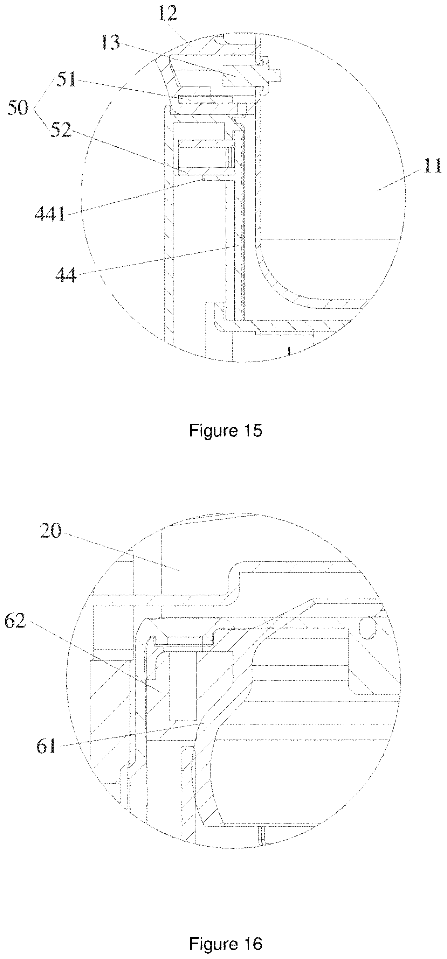

As shown in Figures 11 and 15, the pot 10 further comprises a pot handle 12 provided on the pot body 11, a part of the temperature sensing probe 13 is provided inside the pot handle 12, and the temperature sensing probe 13 is sealed, facilitating washing and cleaning of the pot 10 by a user. The connecting device 50 comprises a first wireless module 51 and a second wireless module 52 that are communicatively connected, the first wireless module 51 being provided inside the pot handle 12 and connected with the temperature sensing probe 13, and the second wireless module 52 being provided in the cooker assembly 40 and connected with the controller. In this embodiment, the above-mentioned temperature sensing probe 13 and the connecting device 50 together constitute a wireless temperature measuring module. With the connecting device 50 comprising the first wireless module 51 and the second wireless module 52 that are communicatively connected in a wireless way, no complicated cabling is needed to achieve real-time transmission of temperature signals. With the second wireless module 52 and the controller connected, based on temperature signals received, the controller adjusts correspondingly the heating temperature and/or cooking program to effectuate a better control of the cooking process, improving cooking effects.

A grooved plate is further provided inside the pot handle 12. The first wireless module 51 is fixed in the pot handle 12 by means of the grooved plate. In order to facilitate washing the entire pot with water, an injection hole is provided at a bottom of the pot handle 12 through which hole resin is injected in to achieve waterproofing of the first wireless module 51.

It should be noted that temperature monitoring and signal transmission can also be achieved by connecting the temperature sensing probe and the connecting device in a wired way. However, given that cabling will complicate the structure, in this embodiment, a wireless temperature measuring module is preferably used for real time monitoring of the temperature in the pot and for signal transmission. The mode in which the temperature sensing probe and the connecting device are connected in a wired way is also within the scope of protection of the present application.

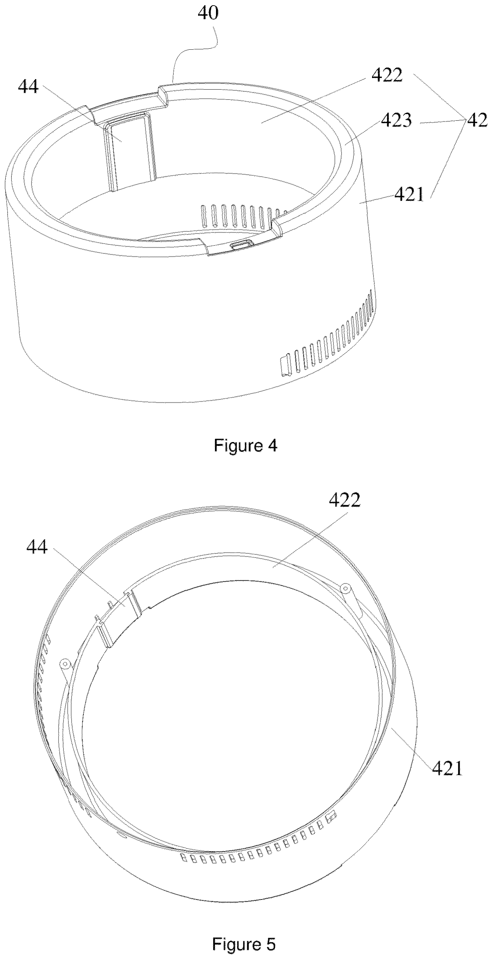

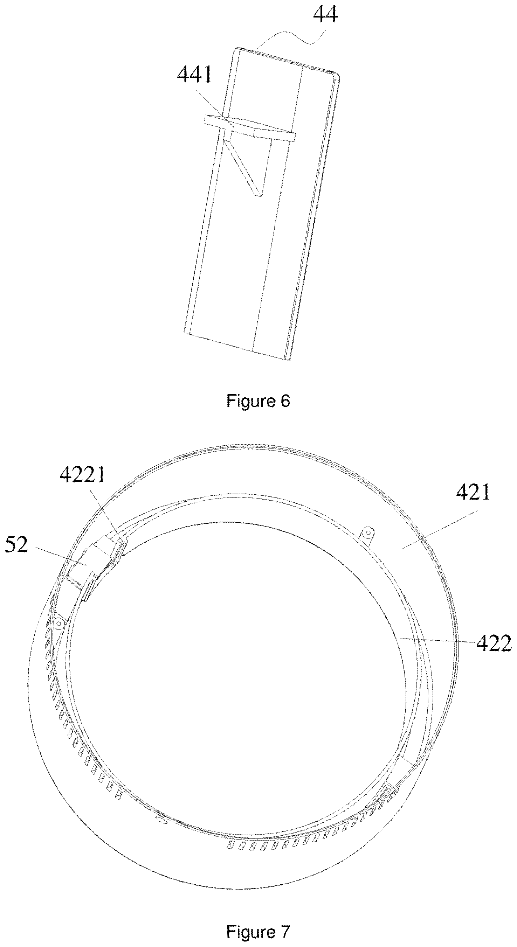

As shown in Figures 3 to 7, and 11 to 15, the cooker assembly 40 comprises a cooker body 42 and a heating device 43 provided at a bottom of the cooker body 42, the cooker body 42 comprising an outer shell 421, an inner shell 422, and a ring portion 423 connected to a top of the outer shell 421 and the inner shell 422, the second wireless module 52 being provided between the outer shell 421 and the inner shell 422. By providing the heating device 43 inside the cooker body 42, heating of the pot 10 can be achieved. By providing the second wireless module 52 between the outer shell 421 and the inner shell 422, below the first wireless module 51, receipt of the signals transmitted by the first wireless module 51 can be ensured and thus signals of the temperature in the pot are transmitted in real time to the controller, which adjusts correspondingly the heating temperature and/or cooking program to effectuate a better control of the cooking process. In this embodiment, the outer shell 421, the inner shell 422, and the ring portion 423 form an integral structure that can be obtained by injection molding.

As shown in Figures 3 to 7 and 11 to 15, a groove 4221 is provided in the inner shell 422, and the cooker body 42 further comprises a plate 44 provided in the groove 4221, the plate 44 having a position-limiting portion 441, the second wireless module 52 being provided between the position-limiting portion 441 and the ring portion 423. The plate 44 has a curvature and is provided concentrically with the inner shell 422. The plate 44 is positioned in the cooker assembly 40 by means of the groove 4221 and the upper surface of the heating device 43, and thus, the position limiting of the second wireless module 52 is achieved by means of the position-limiting portion 441 of the plate 44, so that the second wireless module 52 is located below the first wireless module 51 and that the vertical distance between the first wireless module 51 and the second wireless module 52 is within the range required for signal transmission (the vertical distance between the first wireless module 51 and the second wireless module 52 is within the range of 5 mm to 15 mm, and preferably 10 mm), ensuring stability of signal transmission and thus ensuring the receipt of signals transmitted by the first wireless module 51 by the second wireless module 52. The above-described structure is able to achieve the fixing of the plate 44 and the second wireless module 52 without any screw or snap-fit parts and in a way that is safe, reliable, convenient to mount, and low in cost.

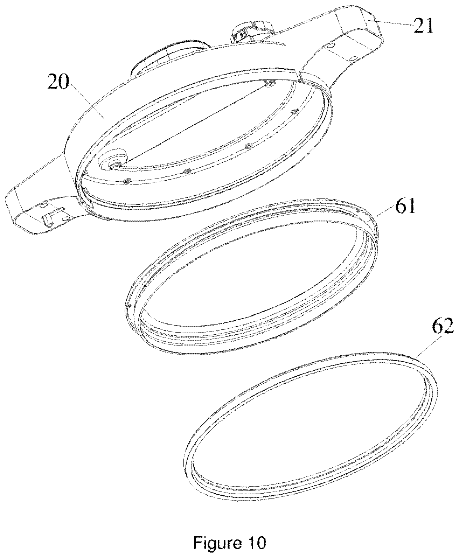

As shown in Figures 10, 11, and 16, the lid 20 further comprises a sealing ring 61 and a fixed pressing ring 62, a connecting part of the sealing ring 61 being located between the lid 20 and the fixed pressing ring 62, and the sealing ring 61 being fixed to an inner surface of the lid 20 through the fixed pressing ring 62. An upper part of the sealing ring 61 envelopes the fixed pressing ring 62 so that the connecting part of the sealing ring 61 is located between the lid 20 and the fixed pressing ring 62 and the fixed pressing ring 62 fixes the sealing ring 61 to an inner surface of the lid 20. After the lid 20 is in position after screwing, the sealing ring 61 is pressed against an inner surface of the pot 10, facilitating pressurization in the pot.

As shown in Figures 3, 11, and 14, the pot 10 comprises a pot body 11 and a pressure relief port 111 provided at a pot mouth of the pot body 11. This pressure relief port 111 is a weak part on the pot body 11. When the pressure inside the pot reaches a certain level or when the pressure inside the pot is abnormal, the sealing ring 61 will be squeezed out of the pressure relief port 111 by the pressure in the pot, so that the space inside the pot is in communication with the atmosphere and the pressure is safely released.. Preferably, the pressure relief port 111 is provided at a position above the pot handle 12. During the course of pressure relief, the pot handle 12 can block some of the hot vapor, improving the pressure cooker's safety.

In this embodiment, the cooking utensil includes air fryers, rice cookers, electric pressure cookers, or multi-function heating cookers that have functions of baking, rice cooking, and dish cooking.

In the description of the present invention, it should be understood that orientation terms such as "front," "back," "upper," "lower," "left," "right," "transversal," "perpendicular," "vertical," "horizontal," "top," and "bottom" indicate an orientation or positional relationship generally based on the orientation or positional relationship shown in the accompanying drawings, which is only for the convenience of describing the present invention and simplifying the description. Unless otherwise stated, these orientation terms do not indicate or imply the intended device or element must have a specific orientation or be constructed or operated in a specific orientation and therefore cannot be understood as a limitation of the scope of protection of the present invention. The orientation terms "inner" and "outer" refer to the inside and outside relative to the contour of a component itself.

For ease of description, spatial relationship terms can be used herein, such as "on top of," "above," "on the upper surface of ... ," and "the above," to describe the spatial position relationship of an object or feature and another object or feature as shown in the accompanying drawings. It should be understood that the spatial relationship terms are intended to encompass different orientations during use or operation in addition to the orientations of an object described in the drawings. For example, if an object in an accompanying drawing is inverted, then the object, described as "on top of another object or structure" or "above another object or structure" will then be positioned as "under another object or structure" or "below another object or structure." Therefore, the exemplary term "above ..."can include both orientations "above ... " and "below ...." The object can also be positioned in a different way (rotated by 90 degrees or in other orientations), and the spatial relationship description used herein can be interpreted correspondingly.

In addition, it should be noted that the use of terms such as "first" and "second" to define parts is only for the convenience of distinguishing the corresponding parts. Unless otherwise specified, the above terms have no special meaning and therefore cannot be understood as a limitation of the scope of protection of the present invention.

What have been described above are merely preferred embodiments of the present invention and not used for imitating the present invention. To those of ordinary skill in the art, various improvements and modifications can be made to the present invention as long as they fall within the scope of protection as defined by the appended claims.

## Claims

1. A cooking utensil comprising:
a pot (10);
a lid (20) covering the pot (10); and
a locking structure (30) arranged between the lid (20) and the pot (10), wherein the locking structure (30) comprises a first thread (31) provided on the pot and a second thread (32) provided on the lid (20), the second thread (32) cooperating with the first thread (31) and the first thread (31) and the second thread (32) being trapezoidal threads, the cooking utensil being **characterized in that** a first connecting line L1 between a first end of the first thread (31) and a center of the pot (10) forms a first angle n with a second connecting line L2 between a second end of the first thread (31) and the center of the pot (10), the first angle n satisfying: 180° ≤n≤360° , so that the first thread (31) has a length between half a turn and one turn of a circumference of the pot (10);
and **in that** the first thread (31) has a thread angle d1 which satisfies: 20° ≤ d1 ≤ 40° , and the second thread ( 32) has a thread angle d2 which satisfies: 20° ≤d2≤40° .

2. The cooking utensil according to claim 1, wherein the first angle n satisfies: 300° ≤n≤355°.

3. The cooking utensil according to any one of the preceding claims, wherein the first thread (31) has a tooth height c1 which satisfies: 2mm≤c1≤4mm, and the second thread (32) has a tooth height c2 which satisfies: 2mm≤ c2≤ 4mm.

4. The cooking utensil according to any one of the preceding claims, wherein:
the first thread (31) has a tooth top width f1 which satisfies: 2mm≤f1≤3mm, and the first thread (31) has a tooth bottom width b1 which satisfies: 4mm≤b1 ≤6mm; and
the second thread (32) has a tooth top width f2 which satisfies: 2mm≤f2≤ 3mm, and the second thread (32) has a tooth bottom width b2 which satisfies: 4mm≤b2≤6mm.

5. The cooking utensil according to any one of the preceding claims, wherein the pot (10) comprises a pot body (11) and a pot handle (12) provided on the pot body (11), and the lid (20) comprises a lid handle (21), wherein the first thread (31) is provided on an outer side wall of the pot body (11), and the first connecting line L1 between the first end of the first thread (31) and the center of the pot (10) forms a second angle e with a center line L3 of the pot handle (12), the second angle e satisfying: 3° ≤e≤30°.

6. The cooking utensil according to any one of the preceding claims, wherein the pot (10) is made of metal, the first thread (31) is formed by rolling on the pot (10), and the pot (10) has a thickness h which satisfies: 0.8mm≤h≤ 1.5mm.

7. The cooking utensil according to any one of the preceding claims, wherein the first thread (31) and the second thread (32) are in clearance fit, and the fit clearance a between the first thread (31) and the second thread (32) satisfies: 0.3mm≤a≤0.8mm.

8. The cooking utensil according to any one of the preceding claims, wherein the first thread (31) and the second thread (32) are continuous thread structures, or the first thread (31) and the second thread (31) comprise a plurality of thread segments.

9. The cooking utensil according to any one of the preceding claims, wherein the pot (10) comprises a pot body (11) and a temperature sensing probe (13) penetrating a side wall of the pot body (11) , a temperature sensing end of the temperature sensing probe (13) extending into the pot body (11).

10. The cooking utensil according to claim 9, wherein it further comprises a cooker assembly (40), a connecting device (50) and a controller, the controller being arranged inside the cooker assembly (40), the connecting device (50) connecting the controller and the temperature sensing probe (13).

11. The cooking utensil according to claim 10 and claim 9 when dependent on claim 5, wherein a part of the temperature sensing probe (13) is arranged in the pot handle (12), in that the connecting device (50) comprises a first wireless module (51) and a second wireless module (52) that are communicatively connected, the first wireless module (51) being arranged in the pot handle (12) and connected with the temperature sensing probe (13), and the second wireless module (52) being arranged in the cooker assembly (40) and connected with the controller.

12. The cooking utensil according to claim 11, wherein the cooker assembly (40) comprises a cooker body (42) and a heating device (43) arranged at a bottom of the cooker body (42), the cooker body (42) comprising an outer shell (421), an inner shell (422), and a ring portion (423) connected to a top of the outer shell (421) and the inner shell (422), and in that the second wireless module (52) is arranged between the outer shell (421) and the inner shell (422).

13. The cooking utensil according to claim 12, wherein a groove (4221) is provided in the inner shell (422), and the cooker body (42) further comprises a plate (44) having a position-limiting portion (441) arranged in the groove (4221), and the second wireless module (52) being disposed between the position-limiting portion (441) and the ring portion (423).

14. The cooking utensil according to any one of the preceding claims, wherein the pot (10) comprises a pot body (11) and a pressure relief port (111) provided at a pot mouth of the pot body (11).

15. The cooking utensil according to any one of the preceding claims, wherein it further comprises a sealing ring (61) and a fixed pressing ring (62), a connecting part of the sealing ring (61) being located between the lid (20) and the fixed pressing ring (62), and the sealing ring (61) being fixed to an inner surface of the lid (20) through the fixed pressing ring (62).

## Patentansprüche

1. Ein Kochgerät, bestehend aus:
einem Topf (10);
einem Deckel (20), der den Topf (10) abdeckt; und
einer Verriegelungsstruktur (30), die zwischen dem Deckel (20) und dem Topf (10) angeordnet ist, wobei die Verriegelungsstruktur (30) ein erstes Gewinde (31), das an dem Topf vorgesehen ist, und ein zweites Gewinde (32), das an dem Deckel (20) vorgesehen ist, aufweist, wobei das zweite Gewinde (32) mit dem ersten Gewinde (31) zusammenwirkt und das erste Gewinde (31) und das zweite Gewinde (32) trapezförmige Gewinde sind, wobei das Kochgerät **dadurch gekennzeichnet ist, dass** eine erste Verbindungslinie L1 zwischen einem ersten Ende des ersten Gewindes (31) und einer Mitte des Topfes (10) einen ersten Winkel n mit einer zweiten Verbindungslinie L2 zwischen einem zweiten Ende des ersten Gewindes (31) und der Mitte des Topfes (10) bildet, wobei der erste Winkel n genügt: 180° ≤ n ≤ 360°, so dass das erste Gewinde (31) eine Länge zwischen einer halben Umdrehung und einer Umdrehung eines Umfangs des Topfes (10) hat; und dass das erste Gewinde (31) einen Gewindewinkel d1 aufweist, der erfüllt: 20° ≤ d1 ≤ 40°, und das zweite Gewinde (32) einen Gewindewinkel d2 aufweist, der erfüllt: 20° ≤ d2 ≤ 40°.

2. Kochgerät nach Anspruch 1, wobei der erste Winkel n erfüllt: 300° ≤ n ≤ 355°.

3. Kochgerät nach einem der vorhergehenden Ansprüche, wobei das erste Gewinde (31) eine Zahnhöhe c1 hat, die erfüllt: 2 mm ≤ c1 ≤ 4 mm, und das zweite Gewinde (32) eine Zahnhöhe c2 aufweist, die erfüllt: 2 mm ≤ c2 ≤ 4 mm.

4. Kochgerät nach einem der vorhergehenden Ansprüche, wobei: das erste Gewinde (31) eine Breite der Zahnoberseite f1 aufweist, die erfüllt: 2 mm ≤ f1 ≤ 3 mm, und das erste Gewinde (31) eine Breite der Zahnunterseite b1 aufweist, die erfüllt:
4 mm ≤ b1 ≤ 6 mm; und
das zweite Gewinde (32) eine Breite der Zahnoberseite f2 aufweist, die erfüllt:
2 mm ≤ f2 ≤ 3 mm, und das zweite Gewinde (32) eine Breite der Zahnunterseite b2 aufweist, die erfüllt: 4 mm ≤ b2 ≤ 6 mm.

5. Kochgerät nach einem der vorhergehenden Ansprüche, wobei der Topf (10) einen Topfkörper (11) und einen am Topfkörper (11) vorgesehenen Topfgriff (12) aufweist und der Deckel (20) einen Deckelgriff (21) aufweist, wobei das erste Gewinde (31) an einer äußeren Seitenwand des Topfkörpers (11) vorgesehen ist, und die erste Verbindungslinie L1 zwischen dem ersten Ende des ersten Gewindes (31) und der Mitte des Topfes (10) einen zweiten Winkel e mit einer Mittellinie L3 des Topfgriffs (12) bildet, wobei der zweite Winkel e erfüllt: 3° ≤ e ≤ 30°.

6. Kochgerät nach einem der vorhergehenden Ansprüche, wobei der Topf (10) aus Metall besteht, das erste Gewinde (31) durch Walzen auf dem Topf (10) geformt wird und der Topf (10) eine Dicke h aufweist, die erfüllt: 0,8 mm ≤ h ≤ 1,5 mm.

7. Kochgerät nach einem der vorhergehenden Ansprüche, wobei das erste Gewinde (31) und das zweite Gewinde (32) in Spielpassung sind und das Passungsspiel a zwischen dem ersten Gewinde (31) und dem zweiten Gewinde (32) erfüllt: 0,3 mm ≤ a ≤ 0,8 mm.

8. Kochgerät nach einem der vorhergehenden Ansprüche, wobei das erste Gewinde (31) und das zweite Gewinde (32) durchgehende Gewindestrukturen sind oder das erste Gewinde (31) und das zweite Gewinde (31) aus mehreren Gewindesegmenten bestehen.

9. Kochgerät nach einem der vorhergehenden Ansprüche, wobei der Topf (10) einen Topfkörper (11) und einen Temperaturfühler (13) aufweist, der eine Seitenwand des Topfkörpers (11) durchdringt, wobei ein Temperaturfühlerende des Temperaturfühlers (13) in den Topfkörper (11) hineinragt.

10. Kochgerät nach Anspruch 9, **dadurch gekennzeichnet, dass** es ferner eine Kocheranordnung (40), eine Verbindungsvorrichtung (50) und ein Steuergerät aufweist, wobei das Steuergerät innerhalb der Kocheranordnung (40) angeordnet ist und die Verbindungsvorrichtung (50) das Steuergerät und den Temperaturfühler (13) verbindet.

11. Kochgerät nach Anspruch 10 und Anspruch 9 in Abhängigkeit von Anspruch 5, wobei ein Teil des Temperaturfühlers (13) im Topfgriff (12) angeordnet ist, wobei die Verbindungseinrichtung (50) ein erstes drahtloses Modul (51) und ein zweites drahtloses Modul (52) aufweist, die kommunikativ verbunden sind, wobei das erste drahtlose Modul (51) im Topfgriff (12) angeordnet und mit dem Temperaturfühler (13) verbunden ist und das zweite drahtlose Modul (52) in der Kocheranordnung (40) angeordnet und mit der Steuerung verbunden ist.

12. Kochgerät nach Anspruch 11, wobei die Kocheranordnung (40) einen Kocherkörper (42) und eine Heizvorrichtung (43) aufweist, die an einem Boden des Kocherkörpers (42) angeordnet ist, wobei der Kocherkörper (42) eine äußere Schale (421), eine innere Schale (422) und einen Ringabschnitt (423) aufweist, der mit einer Oberseite der äußeren Schale (421) und der inneren Schale (422) verbunden ist, und wobei das zweite drahtlose Modul (52) zwischen der äußeren Schale (421) und der inneren Schale (422) angeordnet ist.

13. Kochgerät nach Anspruch 12, wobei in der inneren Schale (422) eine Nut (4221) vorgesehen ist und der Kocherkörper (42) ferner eine Platte (44) mit einem in der Nut (4221) angeordneten Positionsbegrenzungsabschnitt (441) aufweist und das zweite drahtlose Modul (52) zwischen dem Positionsbegrenzungsabschnitt (441) und dem Ringabschnitt (423) angeordnet ist.

14. Kochgerät nach einem der vorhergehenden Ansprüche, wobei der Topf (10) einen Topfkörper (11) und eine an einer Topföffnung des Topfkörpers (11) vorgesehene Druckentlastungsöffnung (111) aufweist.

15. Das Kochgerät nach einem der vorhergehenden Ansprüche, wobei es ferner einen Dichtungsring (61) und einen festen Pressring (62) aufweist, wobei ein Verbindungsteil des Dichtungsrings (61) zwischen dem Deckel (20) und dem festen Pressring (62) angeordnet ist und der Dichtungsring (61) durch den festen Pressring (62) an einer Innenfläche des Deckels (20) befestigt ist.

## Revendications

1. Un ustensile de cuisson comprenant :
un récipient (10) ;
un couvercle (20) recouvrant le récipient (10) ; et
une structure de verrouillage (30) agencée entre le couvercle (20) et le récipient (10),
la structure de verrouillage (30) comprenant un premier filetage (31) aménagé sur le récipient et un deuxième filetage (32) aménagé sur le couvercle (20), le deuxième filetage (32) coopérant avec le premier filetage (31) et le premier filetage (31) et le deuxième filetage (32) étant des filetages trapézoïdaux, l'ustensile de cuisson étant **caractérisé en ce que**
une première ligne de liaison L1 entre une première extrémité du premier filetage (31) et un centre du récipient (10) forme un premier angle n avec une deuxième ligne de liaison L2 entre une deuxième extrémité du premier filetage (31) et le centre du récipient (10), le premier angle n satisfaisant : 180° ≤ n ≤ 360° de sorte que le premier filetage (31) a une longueur comprise entre un demi-tour et un tour d'une circonférence du récipient (10) ;
et **en ce que**
le premier filetage (31) a un angle de filetage d1 qui satisfait : 20° ≤ d1 ≤ 40°, et le deuxième filetage (32) a un angle de filetage d2 qui satisfait : 20° ≤ d2 ≤ 40°.

2. L'ustensile de cuisson selon la revendication 1, dans lequel le premier angle n satisfait : 300° ≤ n ≤ 355°.

3. L'ustensile de cuisson selon l'une quelconque des revendications précédentes, dans lequel le premier filetage (31) a une hauteur de dent c1 qui satisfait : 2mm ≤ c1 ≤ 4mm, et le deuxième filetage (32) a une hauteur de dent c2 qui satisfait : 2mm ≤ c2 ≤ 4mm.

4. L'ustensile de cuisson selon l'une quelconque des revendications précédentes, dans lequel :
le premier filetage (31) a une largeur de sommet de dent f1 qui satisfait : 2 mm ≤ f1 ≤ 3 mm, et le premier filetage (31) a une largeur de partie inférieure de dent b1 qui satisfait : 4 mm ≤ b1 ≤ 6 mm ; et
le deuxième filetage (32) a une largeur de sommet de dent f2 qui satisfait : 2 mm ≤ f2 ≤ 3 mm, et le deuxième filetage (32) a une largeur de partie inférieure de dent b2 qui satisfait : 4 mm ≤ b2 ≤ 6 mm.

5. L'ustensile de cuisson selon l'une quelconque des revendications précédentes, dans lequel le récipient (10) comprend un corps (11) de récipient et une poignée (12) de récipient prévue sur le corps (11) de récipient, et le couvercle (20) comprend une poignée (21) de couvercle, le premier filetage (31) étant prévu sur une paroi latérale extérieure du corps (11) de récipient, et la première ligne de liaison L1 entre la première extrémité du premier filetage (31) et le centre du récipient (10) forme un deuxième angle e avec une ligne centrale L3 de la poignée (12) de récipient, le deuxième angle e satisfaisant: 3° ≤ e ≤ 30°.

6. L'ustensile de cuisson selon l'une quelconque des revendications précédentes, dans lequel le récipient (10) est en métal, le premier filetage (31) est formé par laminage sur le récipient (10), et le récipient (10) a une épaisseur h qui satisfait : 0,8 mm ≤ h ≤ 1,5 mm.

7. L'ustensile de cuisson selon l'une quelconque des revendications précédentes, dans lequel le premier filetage (31) et le deuxième filetage (32) sont en ajustement avec jeu, et l'ajustement avec jeu a entre le premier filetage (31) et le deuxième filetage (32) satisfait : 0,3 mm ≤ a ≤ 0,8 mm.

8. L'ustensile de cuisson selon l'une quelconque des revendications précédentes, dans lequel le premier filetage (31) et le deuxième filetage (32) sont des structures de filetage continu, ou le premier filetage (31) et le deuxième filetage (31) comprennent une pluralité de segments de filetage.

9. L'ustensile de cuisson selon l'une quelconque des revendications précédentes, dans lequel le récipient (10) comprend un corps (11) de récipient et une sonde (13) de détection de température pénétrant dans une paroi latérale du corps (11) de récipient, une extrémité de détection de température de la sonde (13) de détection de température s'étendant dans le corps (11) de récipient.

10. L'ustensile de cuisson selon la revendication 9, dans lequel il comprend en outre un ensemble cuiseur (40), un dispositif de connexion (50) et un contrôleur, le contrôleur étant agencé à l'intérieur de l'ensemble cuiseur (40), le dispositif de connexion (50) reliant le contrôleur et la sonde (13) de détection de température.

11. L'ustensile de cuisson selon la revendication 10 et la revendication 9 lorsqu'elle dépend de la revendication 5, dans lequel une partie de la sonde (13) de détection de température est agencée dans la poignée (12) de récipient, en ce que le dispositif de connexion (50) comprend un premier module sans fil (51) et un deuxième module sans fil (52) qui sont connectés de manière communicante, le premier module sans fil (51) étant agencé dans la poignée (12) de récipient et étant connecté à la sonde (13) de détection de température, et le deuxième module sans fil (52) étant agencé dans l'ensemble cuiseur (40) et connecté au contrôleur.

12. L'ustensile de cuisson selon la revendication 11, dans lequel l'ensemble cuiseur (40) comprend un corps de cuiseur (42) et un dispositif de chauffage (43) agencé au fond du corps de cuiseur (42), le corps de cuiseur (42) comprenant une coque extérieure (421), une coque intérieure (422) et une partie annulaire (423) reliée à une partie supérieure de la coque extérieure (421) et de la coque intérieure (422), et en ce que le deuxième module sans fil (52) est agencé entre la coque extérieure (421) et la coque intérieure (422).

13. L'ustensile de cuisson selon la revendication 12, dans lequel une rainure (4221) est ménagée dans la coque intérieure (422), et le corps de cuiseur (42) comprend en outre une plaque (44) ayant une partie (441) de limitation de position agencée dans la rainure (4221), et le deuxième module sans fil (52) étant agencé entre la partie (441) de limitation de position et la partie annulaire (423).

14. L'ustensile de cuisson selon l'une quelconque des revendications précédentes, dans lequel le récipient (10) comprend un corps (11) de récipient et un orifice (111) de décharge de pression prévu au niveau d'une embouchure du corps (11) de récipient.

15. L'ustensile de cuisson selon l'une quelconque des revendications précédentes, dans lequel il comprend en outre un anneau d'étanchéité (61) et un anneau de pression (62) fixe, une partie de liaison de l'anneau d'étanchéité (61) étant située entre le couvercle (20) et l'anneau de pression (62) fixe, et l'anneau d'étanchéité (61) étant fixé à une surface intérieure du couvercle (20) par l'intermédiaire de l'anneau de pression (62) fixe.
